# EUROPEAN PATENT APPLICATION

(11) **EP 3 848 877 A1**
(43) Date of publication of application: **14.07.2021**
(21) Application number: 19819514.1
(22) Date of filing: 17.06.2019
(51) Int. Cl.: G06Q 30/02

(54) **ADVERTISING METHOD AND ADVERTISING DEVICE**

(30) Priority: 15.06.2018 JP 2018114531
(71) Applicant: MGR System Plan Co., Ltd., Hirakata-shi, Osaka 573-0163 (JP)
(72) Inventor: CHIJIMATSU Yoshihiro, Kobe-shi, Hyogo 652-0812 (JP); MAGARA Isao, Hirakata-city, Osaka 5730163 (JP)
(74) Representative: Hinkelmann, Klaus
(86) International application number: PCT/JP2019/023841
(87) International publication number: WO 2019/240295

(57) **Abstract**

An advertising method and an advertising device are provided so as to perform an effective advertisement to desirable targets while the targets enjoy visiting repeatedly a website. An advertising device 1 and an advertising method include: information collection means 2 that collects, during an event, position information over time on a player who participates in the event; display means 3 that reproduces and displays the event on the website by combining information (including the collected position information) on the player with a virtual reality (or real space) using an avatar of the player; information display means 4 that displays information on a selected player at the time of the event when a visitor of the website selects a preferred player; and advertising means 5 that provides the visitor of the website with advertisements set in advance in the display means 3 and the information display means 4.

## Description

### Technical Field

The present invention relates to an advertising method and an advertising device for pleasantly and effectively promoting and advertising specific articles for limited users.

### Background Art

When one goes running, for example, he/she puts on running shoes for the specific purpose of running, which are naturally different from normal shoes and thus for the limited users. Accordingly, advertising of such articles for specific users on terrestrial television, radio or newspaper may be too expensive taking into account its effectivity, because the above media is for all the audience including a number of people who are not target audience.

Therefore, conventionally, when a company intends to advertise its running shoes and the like, it advertises them at the marathon tournament venue as a sponsor, places an advertisement in tournament pamphlets, or places an advertisement in running magazines.

These days, internet browsing about the running is detected using internet browsing history so as to provide visitors who are browsing the internet with advertisements of the related articles (for example, see Patent Document 1).

### Prior Art Document

### Patent Document

[Patent Document 1] JP 2016-012296 A

### Summary of the Invention

### Problem to Be Solved by the Invention

However, when an advertisement is provided based on the browsing history to the visitor who is browsing the internet, such an advertisement may annoy the visitor because despite of the search for the visitor's current interest, the advertisement may be about another article based on his/her past browsing history. In this case, the advertisement could be an obstacle to the current search and thus could be far from effective.

In many cases, an event such as a marathon is organized by a local government that budgets for the tournament in expectation of economic effects including travel expenses to the event venue, food and drink expenses at the event venue, lodging expenses at the event venue, and other expenditures. However, the local government as an organizer does not have means for directly recovering the incurred expenses except for advertising costs paid by sponsor companies on the day of the tournament. The local government can recover the expenses only indirectly by increased tax revenue from the local companies in line with the economic effects of the tournament.

The present invention was made in consideration of the above circumstances, an object of which is to provide an advertising method and an advertising device for effectively promoting and advertising an article to target users by making website visitors feel fun and further view the website.

### Means for Solving the Problem

In order to solve the above problems, an advertising method of the present invention includes: an information collection step of collecting, during an event, position information over time on each of players who participates in the event; a display step of reproducing and displaying the event on a website by combining information including the position information on each of the players with a virtual reality or real space using an avatar corresponding to each of the players; an information display step of providing, when a visitor of the website selects a preferred player among the players, information on the selected player at a time of the event; and an advertising step of providing the visitor of the website with an advertisement set in advance in the display step and/or the information display step.

In the advertising step of the above-described advertising method, when the preferred player is selected in the information display step, an advertisement of a sponsor company that supports the selected player may be provided.

In the information display step of the above-described advertising method, when a preferred avatar is selected in the reproduced event, a player corresponding to the avatar may be selected among the players.

In the information display step of the above-described advertising method, other players may be selected among the players in addition to the selected player as a main player so as to compare respective records of the selected players in the event.

In the display step of the above-described advertising method, when the preferred player is selected, the event in the virtual reality or real space may be reproduced from a viewpoint of the selected player during the event.

In the display step of the above-described advertising method, an avatar registered by each of the players may be shown to another player who is registered as a friend by a corresponding player among the players.

In the display step of the above-described advertising method, a second avatar may be displayed in such a manner that the second avatar is superimposed on the display of the avatar in the event currently displayed, and the second avatar may be prepared based on information collected in the information collection step on a corresponding player in another event.

In the information display step of the above-described advertising method, a record of the preferred player may be compared to a record of the player corresponding to the second avatar in the other event.

In the display step of the above-described advertising method, the number of the avatars displayed in the virtual reality or real space may be limited using filtering conditions set in advance.

In the advertising step of the above-described advertising method, the advertisement may be shown in the virtual reality or real space.

In order to solve the above problems, an advertising device of the present invention includes: information collection means for collecting, during an event, position information over time on each of players who participates in the event; display means for reproducing and displaying the event on a website by combining information including the position information on each of the players with a virtual reality or real space using an avatar corresponding to each of the players; information display means for providing, when a visitor of the website selects a preferred player among the players, information on the selected player at a time of the event; and advertising means for providing the visitor of the website with an advertisement set in advance in the display means and/or the information display means.

In the above-described advertising method, the advertising means may provide, when the preferred player is selected in the information display means, an advertisement of a sponsor company that supports the selected player.

In the above-described advertising device, the information display means may select, when a preferred avatar is selected in the reproduced event, a player corresponding to the avatar among the players.

In the above-described advertising device, the information display means may select other players among the players in addition to the selected player as a main player so as to compare respective records of the selected players in the event.

In the above-described advertising device, the display means may reproduce, when the preferred player is selected, the event in the virtual reality or real space from a viewpoint of the selected player during the event.

In the above-described advertising device, the display means may show an avatar registered by each of the players to another player who is registered as a friend by a corresponding player among the players.

In the above-described advertising device, the display means may display a second avatar in such a manner that the second avatar is superimposed on the display of the avatar in the event currently displayed, and the second avatar may be prepared based on information collected in the information collection step on a corresponding player in another event.

In the above-described advertising device, the information display means may compare a record of the preferred player to a record of the player corresponding to the second avatar in the other event.

In the above-described advertising device, the display means may limit the number of the avatars displayed in the virtual reality or real space using filtering conditions set in advance.

In the above-described advertising device, the advertising means may show the advertisement in the virtual reality or real space.

In order to solve the above problems, a computer program of the present invention includes instructions to operate the above-described advertising device.

### Effect of the Invention

As described above, with the present invention in which the event is reproduced in the virtual reality or real space using the avatar based on the position information, the visitor who participated in the event or the visitor who is interested in the event can visit the website, even after the event, to confirm the state of the preferred player at the intended position or at the intended time by watching the reproduced event by the avatar. Also, the visitor can collect detail information on the results of the preferred player in the event. Thus, it is possible to repeatedly enjoy the event reproduced by the avatar, and the website can get a number of views. Furthermore, for the advertiser, it is possible to show the advertisement when the targets, i.e. the visitors of the website including the players who participated in the event are accessing the website. Therefore, effective advertising is possible.

### Brief Description of the Drawings

[FIG. 1]

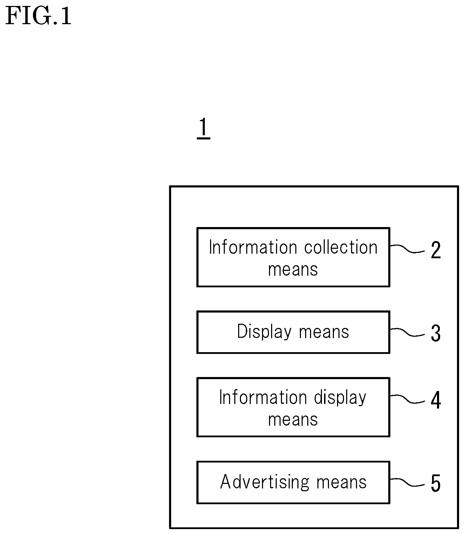

   FIG. 1 is a block diagram schematically illustrating an overall configuration of an advertising device of the present invention.
[FIGS. 2]

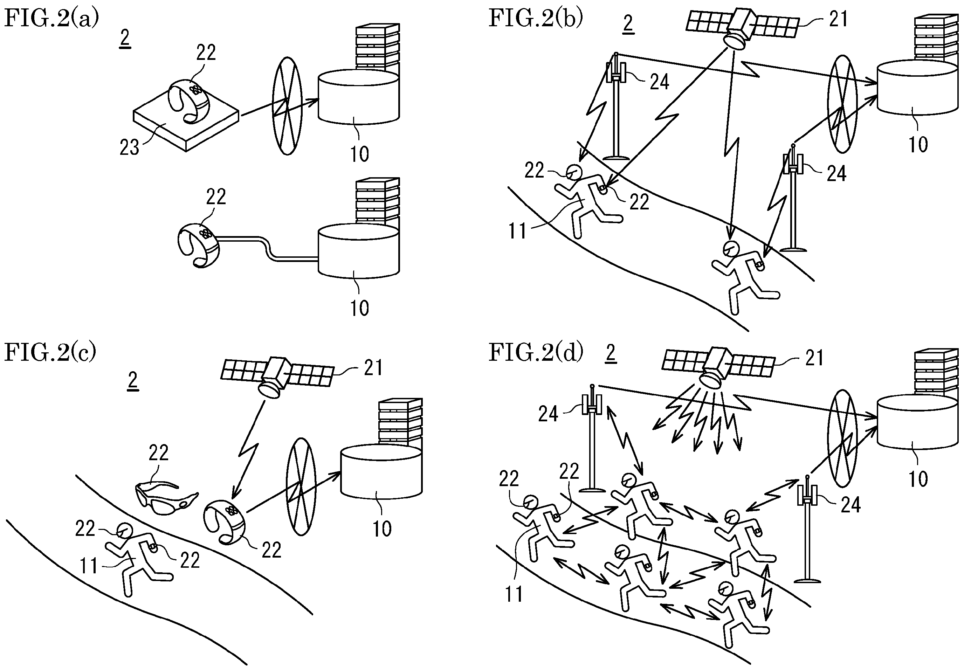

   FIGS. 2(a) to 2(d) are schematic diagrams respectively illustrating information collection means of the advertising device of the present invention.
[FIGS. 3]

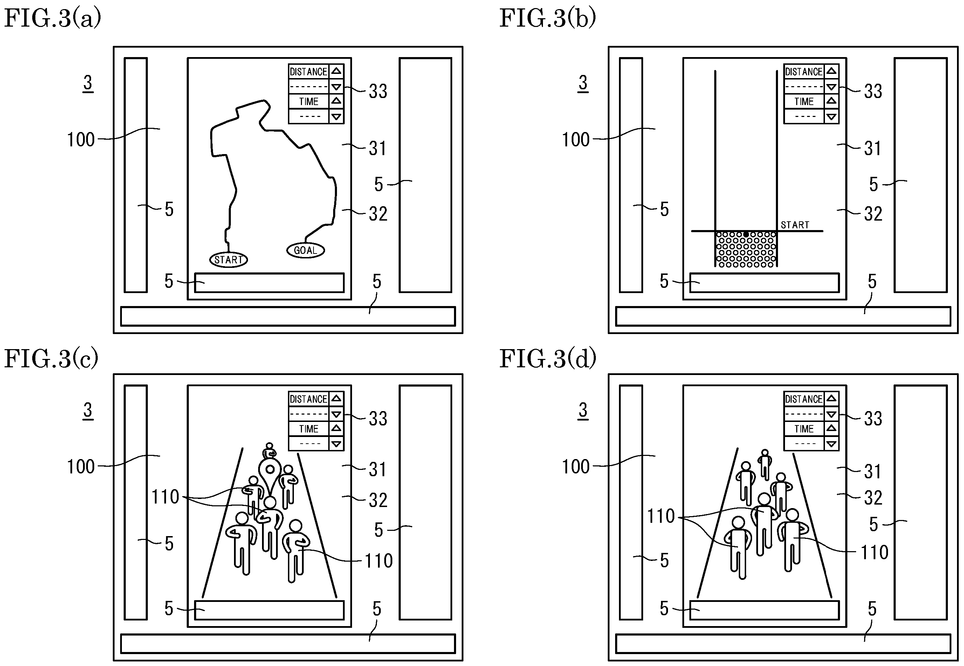

   FIGS. 3(a) to 3(d) are schematic diagrams respectively illustrating display means of the advertising device of the present invention.
[FIGS. 4]

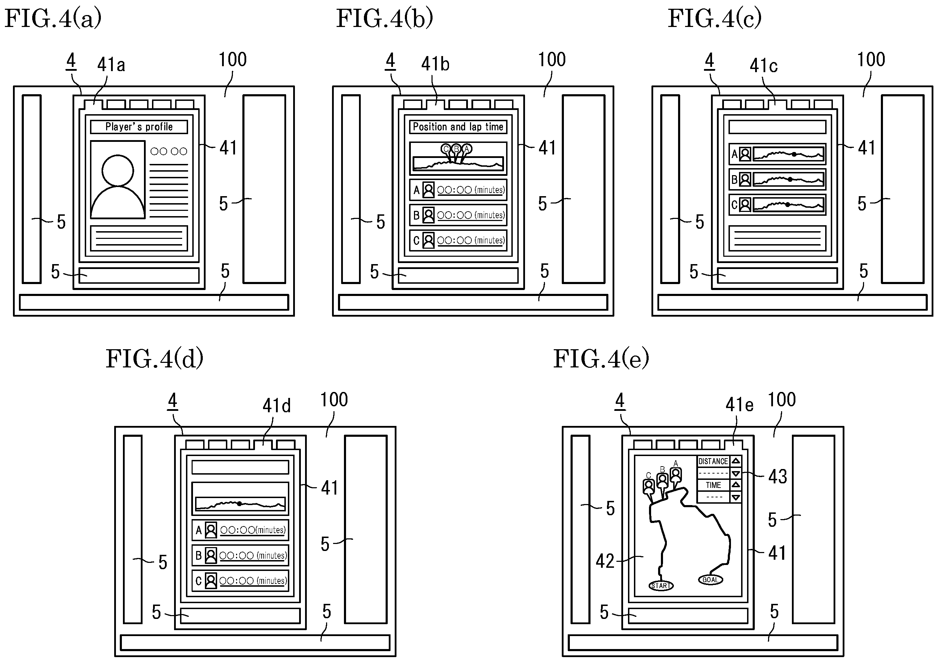

   FIGS. 4(a) to 4(e) are schematic diagrams respectively illustrating information display means of the advertising device of the present invention.
[FIG. 5]

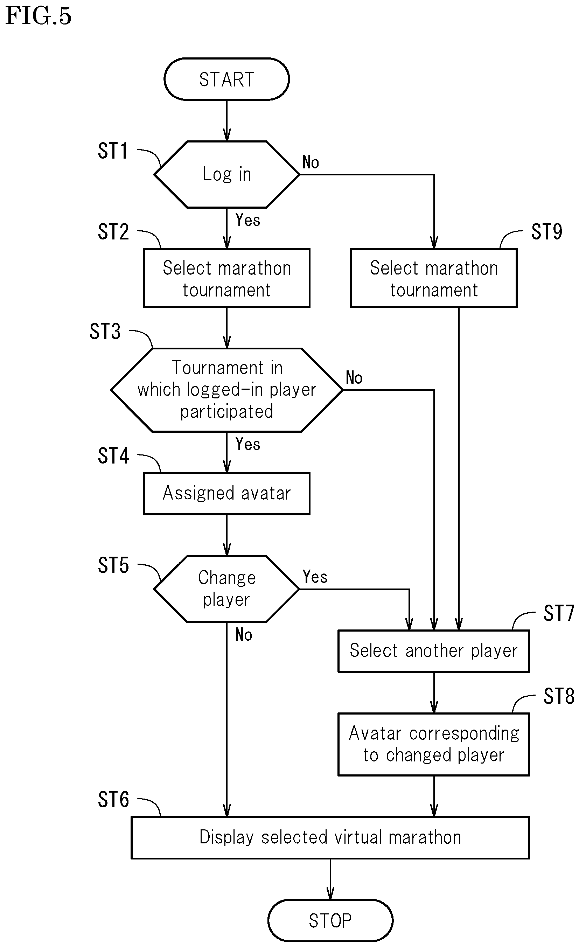

   FIG. 5 is a flow chart explaining display of a virtual marathon by the display means of the advertising device of the present invention.
[FIG. 6]

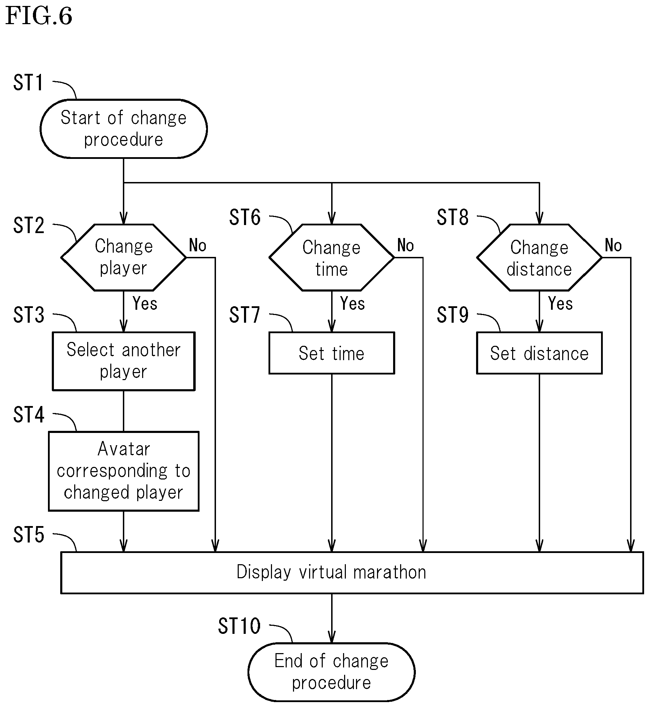

   FIG. 6 is a flow chart explaining change of display setting by the display means of the advertising device of the present invention.
[FIG. 7]

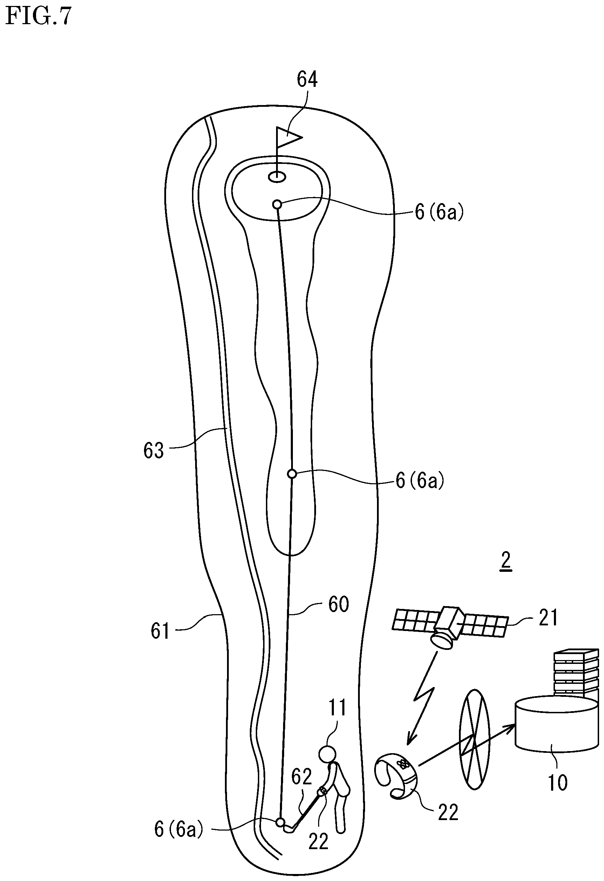

   FIG. 7 is a schematic diagram illustrating information collection means of the advertising device according to another embodiment of the present invention.
[FIG. 8]

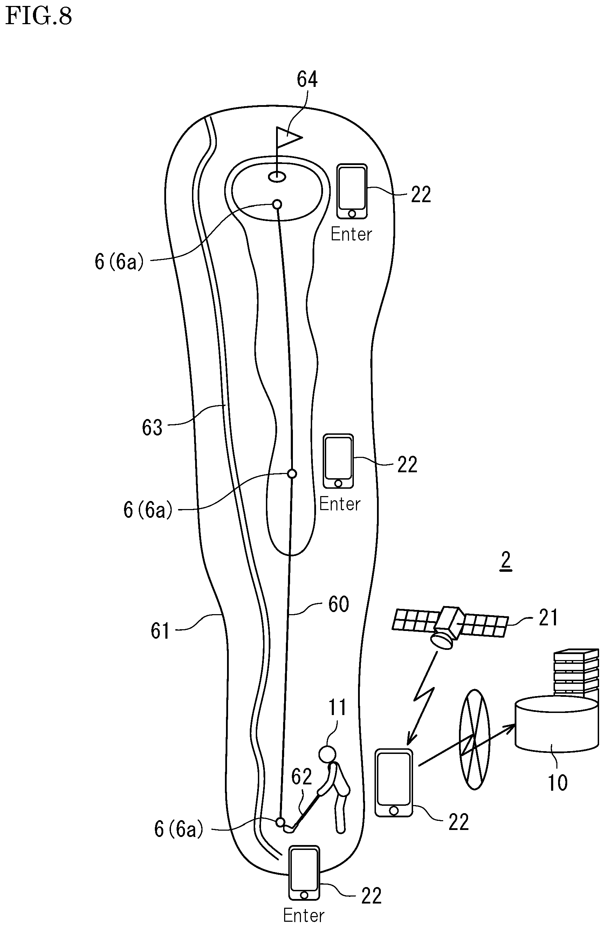

   FIG. 8 is a schematic diagram illustrating information collection means of the advertising device according to another embodiment of the present invention.
[FIGS. 9]

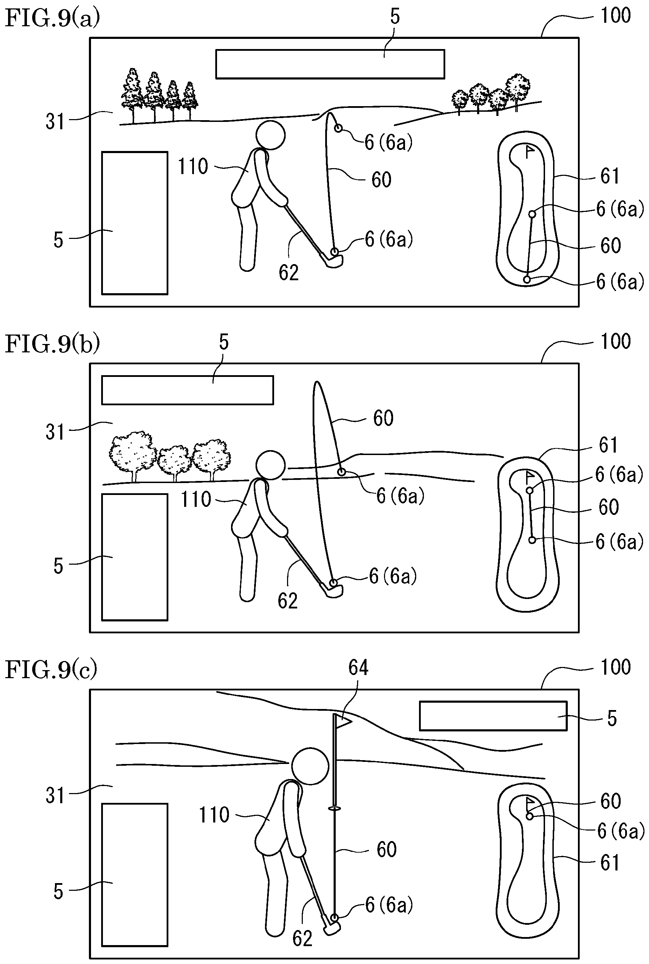

   FIGS. 9(a) to 9(c) are schematic diagrams respectively illustrating display means of the advertising device according to another embodiment of the present invention.
[FIGS. 10]

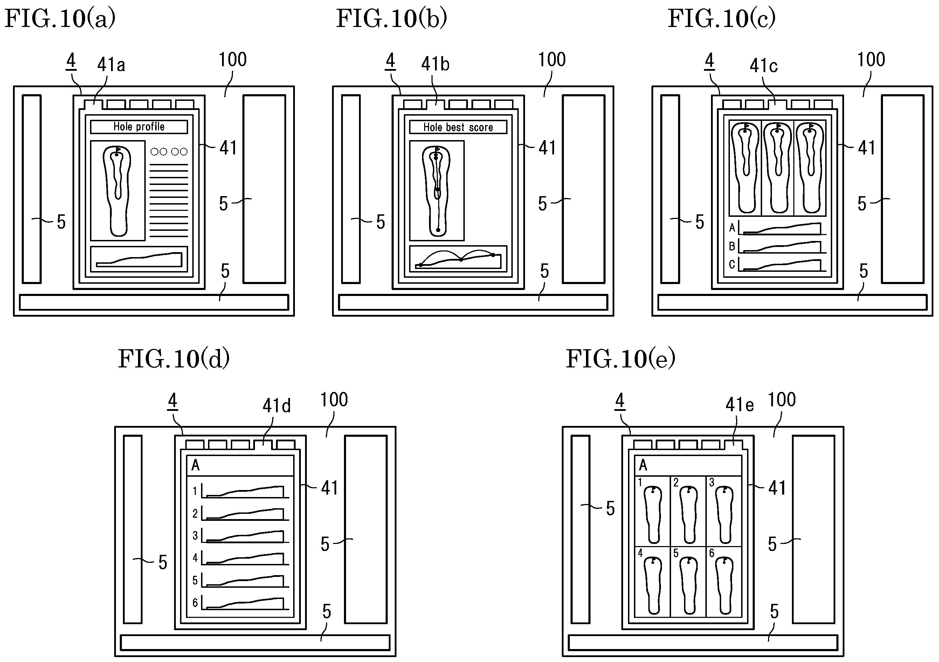

   FIGS. 10(a) to 10(e) are schematic diagrams respectively illustrating information display means of the advertising device according to another embodiment of the present invention.

### Means for Carrying out the Invention

Hereinafter, embodiments of the present invention will be described with reference to the drawings.

FIG. 1 schematically illustrates an overall configuration of an advertising device 1 of the present invention. FIGS. 2 to 4 illustrate information collection means 2, display means 3, information display means 4 and advertising means 5 included in the advertising device 1 of the present invention.

Hereinafter, a marathon tournament is assumed to be an event to be explained. The advertising device 1 includes: the information collection means 2 that collects, during the marathon, position information over time on each player 11 who participates in the marathon tournament; the display means 3 that displays, on a website 100, a virtual marathon 32 reproducing the marathon tournament by combining information (including the collected position information) on the player 11 with a virtual reality (or real space) 31 using an avatar 110 of the player 11; the information display means 4 that displays information on the player 11 corresponding to a specific avatar 110 at the time of the marathon tournament when a visitor of the website 100 accesses the avatar 110 of the virtual marathon 32 displayed by the display means 3; and the advertising means 5 that provides, for every access, advertisements set in advance to the visitor of the website.

The information collection means 2 collects, during the marathon, the position information over time on each player 11 who participates in the marathon tournament. Specifically, application software dedicated to collection of the position information over time using NAVSTAR 21 is downloaded to a smart terminal 22 (such as Smartwatch, Smartphone and Smartglasses) having the GPS function. Each player 11 who participates in the marathon tournament wares/carries the above smart terminal 22 so that the position information over time on the player 11 is collected by the smart terminal 22. The smart terminal 22 may be a dedicated one only having the GPS function, or may be a smart terminal 22 having other functions to measure the heat rate or other kinds of information or also having the verbal communication function. As to the GPS function, it is preferable to use a system that conforms to the Japanese satellite navigation system "Michibiki", which has advantages such as a short signal acquisition time and a small margin of error.

In this case, the position information may be collected in the smart terminal 22 during the marathon so as to be transmitted in a server 10 at the finishing line of the marathon when the tournament is ended, as shown in FIG. 2(a). The position information may be transmitted from the smart terminal 22 to the server 10 by directly connecting the smart terminal 22 to the server 10 at the finishing line, or by data communication from the smart terminal 22 using a receiver 23 at the finishing line. Since the position information is collected in the smart terminal 22 and then is transmitted to the server 10 after ending of the tournament, it is possible to reliably collect the information at the end of the marathon tournament without complexity of communication compared to the case in which the information is collected from the smart terminal 22 in real time.

Also, when the advertising device 1 is used substantially at the same time as the marathon tournament by collecting the information in real time during the tournament, the position information collected using the NAVSTAR 21 in the smart terminal 22 worn by the player 11 may be transmitted to the server 10 from a plurality of base stations 24 provided at desired intervals by short-range wireless communication using Bluetooth (registered trademark) technology as shown in FIG. 2(b). Alternatively, the position information may be received by the server 10 in the real time by wireless communication using WIFI (registered trademark) technology, as shown in FIG. 2(c). However, when the wireless communication using WIFI (registered trademark) is performed, a battery of the smart terminal 22 drains quickly due to transmission of the position information from the smart terminal 22, and thus, if the event takes a long time (e.g. a marathon and a triathlon), the battery of the smart terminal 22 may be dead. Therefore, in this case, it is preferable that a number of base stations 24 are provided at predetermined intervals and that the position information sent from the smart terminal 22 is received by the base stations 24 so as to be further transmitted to the server 10 by short-range wireless communication using Bluetooth (registered trademark) technology. However, this short-range wireless communication has still a defect that it requires many base stations 24. Thus, when a number of players 11 participate in the marathon tournament, the communication is crossed and confused. In this case, it is possible to use the 920 MHz multi-hop communication technology in which the smart terminal 22 itself can serve as a base station of communication network, as shown in FIG. 2(d). As described above, the position information collected in the information collection means 2 is further collected in the server 10. In FIG. 2, the Smartglasses and the Smartwatch are illustrated as the smart terminal 22. Each of them may be independently used, or also may be used together. Also, it may be another kind of smart terminal 22, or further it may be a smart terminal 22 that collects information other than that from the NAVSTAR 21 in combination with various kinds of sensors (not shown). As to the information collected by the information collection means 2, it is not limited to the above-described position information. Other kinds of information may be collected together. In this case, the smart terminal 22 may include a sound sensor (microphone), a CCD image sensor, a 9-axis sensor, a pulse wave sensor and the like so as to collect the other kinds of information such as: sound information; image information; body tilt; pitch when running (strokes per minute in swimming, or crank rotation speed and output wattage in bicycle racing); landing position; and heart rate.

The display means 3 is configured to display, on the website 100, the virtual marathon 32 reproducing the marathon tournament by combining information (including the position information collected during the marathon) on each player 11 with a virtual reality (or real space) 31 using the avatars 110 each corresponding to the players 11. Thus, the display means 3 shows a visitor who accesses the website 100 the virtual marathon 32 in which the avatars 110 corresponding to the respective players 11 are running. In this case, the virtual reality (or real space) 31 may be configured to use either one of the virtual reality or the real space, or may be configured to switch them when using. As to the avatars 110 corresponding to the respective players 11, it is possible to express the difference between the avatars 110 by adding respective bib numbers at the time of participating in the marathon tournament to the default avatars 110 in the shape of runner.

Apart from the above, the default avatar 110 may be customized so as to express the difference between the respective avatars 110. As to options to customize the avatar 110, it is possible, for example, to choose gender, age range, height, weight, hair color and length, skin color, and clothes color. Thus, the different avatars 110 depending on the players 11, which are customized by choosing the above options, are combined with the virtual reality (or real space) 31 to reproduce the virtual marathon 32 on the website 100. The choice of the above options may be automatically set in advance by the organizer based on the information at the time of application of participation in the marathon tournament. Alternatively, the player 11 who participates in the marathon tournament may freely customize his/her avatar 110 by accessing the website 100.

The display means 3 may display the whole marathon course of the virtual marathon 32 using a reducing function, as shown in FIG. 3(a). Also, it may display, for example, the starting line of the marathon course using an enlarging function, as shown in FIG. 3(b). Thus, the display means 3 can display, on the screen, a target location whose size is freely adjusted using the enlarging/reducing function. This display may be a plane display as shown in FIGS. 3(a) and 3(b) or may be a stereoscopic display (three-dimensional display) as shown in FIGS. 3(c) and 3(d). Alternatively, the display means 3 may switch the display between the plane display and the stereoscopic display. In the case of the stereoscopic display, the display means 3 may display, in center on the screen, the avatar 110 corresponding to a predetermined player 11 chosen by the visitor who accesses the website 100 as shown in FIG. 3(c), or may display the screen in the direction of travel from the viewpoint of the avatar 110 corresponding to the above predetermined player 11 as shown in FIG. 3(d). Also, when the predetermined player 11 is changed to another player 11, the display means 3 is set to display the screen on which another avatar 110 corresponding to the changed player 11 is displayed in center, or to display the screen in the direction of travel from the viewpoint of the other avatar 110.

As shown in FIG. 5, when the visitor accesses the website 100 that executes the display means 3 of the advertising device 1 and logs in with personal information (ST1), the visitor is prompted to select a marathon tournament (ST2). When the visitor selects the marathon tournament in which he/she participated (ST3), the visitor is identified as a player 11 who participated in the marathon tournament and his/her avatar 110 is automatically assigned (ST4). Thus, if the visitor does not change the player 11 to another player 11 (ST5), the virtual marathon 32 is displayed (ST6) with the assigned avatar 110 being in center. After selecting the marathon tournament in which the visitor participated, if the visitor selects to change the player 11 without using his/her assigned avatar 110 (ST5), the screen is switched, after selection of another player 11 (ST7), to display the virtual marathon 32 (ST6) with the avatar 110 corresponding to the selected player 11 being in center (ST8). Also, after logging in, if the visitor selects a marathon tournament which he/she did not participate in (ST3), the visitor can select the player 11 (ST7) so as to switch the screen and display the virtual marathon 32 (ST6) with the avatar 110 corresponding to the selected player 11 being in center (ST8). Furthermore, in the case in which the visitor accesses the website 100 that executes the display means 3 but does not log in (ST1), when the visitor selects the player 11 (ST7) after selection of the marathon tournament (ST9), the virtual marathon 32 is displayed (ST6) with the avatar 110 corresponding to the selected player 11 being in center.

As shown in FIG. 6, in the display means 3, the visitor can select to change the setting in a state in which the virtual marathon 32 is displayed (ST1). When the visitor selects to change the player (ST2) and selects the player 11 (ST3), the avatar 110 is also changed to that corresponding to the selected player 11 (ST4), and then the display means 3 re-displays the virtual marathon 32 (ST4). Thus, the visitor can change the previously selected player 11 to another player 11 whenever he/she wants to do so, and therefore can change the avatar 110 to be the main player in the virtual marathon 32. Apart from the change of the player 11, when the visitor selects to change the time from the start of the virtual marathon 32 (ST6) and sets the time (ST7), the display means 3 displays the virtual marathon 32 at the changed time (ST5). Also, when the visitor selects to change the distance from the starting line of the virtual marathon 32 (ST8) and sets the distance (ST9), the display means 3 displays the virtual marathon 32 at the changed distance (ST5). In the display of the virtual marathon 32 after the time or the distance is thus changed, not only the avatar 110 of the player 11 but also the other avatars 110 of the other players 11 are displayed based on the position information on the player 11 at the moved location, so that the situation of the actual marathon tournament is reproduced. As exemplarily shown in FIGS. 3(a) to 3(d), the time or the distance can be changed by changing the setting of a display change 33 for changing the time and/or distance. The display change 33 is disposed on the same screen as the virtual marathon 32. However, the display change 33 is not needed to be continuously displayed, it may be hidden freely. After the setting is changed, the change procedure is ended (ST10).

The player 11 may be selected by entering his/her name, or his/her bib number or GPS number in the marathon tournament. The player 11 may also be selected by entering the ranking at the finishing line, the ranking by age, the ranking at a certain passing point or the ranking by gender. Also, it is possible to select the player 11 from the list of the players 11, or by directly touching (or placing the cursor over) the avatar 110 in the virtual marathon 32 on the screen of the website 100.

The display of the virtual marathon 32 by the display means 3 may be a still image that does not move from the default display unless the visitor of the website 100 operates, or may be a video in which the display proceeds as time passes and the selected avatar 110 and the avatars 110 around the selected avatar 110 start to move at the same time. When the video is displayed, the video may be played, stopped, fast-forwarded, and rewound. Also, the playback speed may be adjusted. In the case in which the display proceeds as time passes, each avatar 110 runs at a different speed in the virtual reality (or real space) 31 for every selected player 11. Thus, in the virtual marathon 32, if the visitor selects the top player as the player 11, he/she can experience the speed of the top player through the avatar 110.

The avatar 110 customized by the player 11 to be displayed by the display means 3 may be displayed only to the player 11 and the player's specific friends set by the player 11. In place thereof, a predetermined avatar 110 set by the server 10 may be displayed to the general visitors. As to changing the player 11, the player 11 may set in advance to prevent the visitors other than the player 11 from accessing his/her avatar 110 or to allow only his/her specific friends on the friend lists on social networking sites (SNS) to access the avatar 110.

Basically, all the avatars 110 corresponding to all the players 11 who participated in the marathon tournament are displayed in the virtual marathon 32 by the display means 3. However, the display means 3 may change the screen to display only specific avatars 110. In this case, the specific avatars 110 to be displayed may be: the avatar 110 corresponding to the player 11 selected by the visitor of the website 100; the avatars 110 corresponding to the players 11 classified in the same age range as the avatar 110 of the selected player 11; the avatars 110 corresponding to male/female players 11; and the avatars 110 corresponding to the players 11 ranked in the specific places at the finishing line, for example, in the top 100.

The display means 4 can switch the display of the website 100 from the virtual marathon 32 to respective pages 41 each displaying detail information on the player 11 at the time of participating in the marathon tournament 32 when the visitor of the website 100, who visits the virtual marathon 32 reproduced by the display means 3, accesses his/her selected player 11 in the virtual marathon 32. Examples of the detail information on the player 11 displayed by the display means 4 include a display page 41a displaying the results of the player 11 in other tournaments and the profile of the player 11, as shown in FIG. 4(a). The display page 41a may also provide information linked to the position information on the avatar 110 of the player 11 selected by the visitor when, for example, the avatar 110 moves to a location 10 km away from the starting line. This position information may include, for example: a lap time per kilometer from the start line to the distance of 10 km; an average speed; and a height topography of the marathon course. The detail information is shown by the values, or by the graphic display such as a line graph and a bar graph.

The display of the detail information on the player 11 may be a comparison display showing not only a record A (first record A) of the selected player 11 but also other records B and C of the other selected players 11 in a comparative manner. Specifically, as shown in FIG. 4(b), the display of the detail information may be a comparison display page 41b on which the records A, B and C are comparatively displayed by the height topography of the course and by the time display as each lap time when passing the predetermined distance, so that the difference between the player 11 selected by the visitor and the other selected players 11 is displayed. Also, as shown in FIG. 4(c), the display of the detail information may be a mileage comparison page 41c on which the records A, B and C at the current locations at a desired time are displayed in the height topography of the course to show the difference in distance, so that the distance between the player 11 selected by the visitor and the other selected players 11 at the desired time is displayed by entering the desired time. Also as shown in FIG. 4(d), the display of the detail information may be a time comparison page 41d on which the records A, B and C of the passing time at a desired distance are displayed to show the difference in time, so that the time difference at the desired distance between the player 11 selected by the visitor and the other selected players 11 is displayed by entering the desired distance in the height topography. Furthermore, as shown in FIG. 4(e), the display of the detail information may be a position comparison page 41e on which the record A of the player 11 selected by the visitor and the records B and C of the other selected players 11 are comparatively displayed on a course map 42. In this case, the visitor changes the time or the distance to his/her desired time or distance by increasing/decreasing the time or the distance using a display change 43 for time and distance, which also displayed on the screen. Thus, the record A at the position of the player 11 selected by the visitor can be displayed at the changed time or distance. Also, the records B and C at the respective positions of the other players 11 are displayed along with the record A on the thus moved position of the player 11 so as to compare one to another.

The detail information on the player 11 provided by the information display means 4 may be displayed by switching the respective pages 41 of the website 100. Also, the respective pages 41 about the detail information may be displayed on the same screen at the same time as the above-described display means 3, or may be displayed in a switching manner. The number of the pages 41 is not particularly limited. Also, three records in total (i.e. the record A of the selected player 11 and the records B and C of the other selected players 11) are comparatively displayed here, however, two records or not less than four records may be comparatively displayed. As to selection of the other players 11, it may be performed by searching for the bib number, the name, the finish time, the ranking by age and the like so as to enter them to select. Also, the selection of the other players 11 may be performed by entering the information into the respective pages 41. Or, it may be performed by entering the information into the comparison display page 41b of the information display means 4, in this case the information that is entered into the comparison display page 41b may be reflected to the other pages 41 for comparison.

Also, the disclosure of the information displayed by the information display means 4 can be set by the player 11. All pieces of information may be viewed by the visitors, or some pieces of information may be viewed by the visitors. Furthermore, different disclosure contents may be viewed respectively by the player 11, the specific friends accepted by the player 11, and the general visitors.

The detail information displayed by the information display means 4 is not limited to the above-described distance, time, speed, lap time, and position. It may be any kind of information to the extent that it is collected by the information collection means 2 or that can be obtained using the various kinds of information thus collected. More specifically, it may include, apart from the above-described kinds of information,: sound information; image information; body tilt; pitch when running (strokes per minute in swimming, or crank rotation speed and output wattage in bicycle racing); landing position; and heart rate.

As shown in FIGS. 3 and 4, the advertising means 5 is embedded in the screen by the display means 3 and the information display means 4 to show the advertisements to the visitors of the website 100 configured by the display means 3 when they are watching the virtual marathon 32 reproduced by the display means 3 or to the visitors of the website 100 configured by the information display means 4 when they are watching the detail information such as records of the player 11 by the information display means 4. As to the advertisements by the advertising means 5, it is possible to use advertisements by an advertiser who is a sponsor of the virtual marathon 32 or advertisements related to the virtual marathon 32. For example, the advertisements by a sports goods company that is a sponsor of the virtual marathon 32 can be used for the advertising means 5. In this way, the sports goods company can show the advertisements by the advertising means 5 to the visitors through the website 100, which means that the company can advertise not only on the day of the marathon tournament. Thus, effective advertising is possible.

Also, a party that is not a sponsor of the marathon tournament may be a sponsor in the advertising means 5 of the advertising device 1 to distribute an advertisement. For example, if a company is not a general sports goods company that sells substantially all the items for the marathon (such as running wears, running shoes, watches, sun glasses and nutraceutical foods) but a company that sells a particular kind of product for the marathon, and if this company cannot be a sponsor of the actual marathon tournament because of budget constraints, it can still distribute an advertisement using the advertising means 5, depending on the budget, to the players 11 who participated in the marathon tournament as the target customers. Also in the advertising means 5, the age range and/or the gender of the target players 11 can be recognized depending on which player 11 is chosen by them. Thus, the information display means 4 can distribute, for example, advertisements of sunscreen for sports or beauty related products to the target players 11 who chose the female player 11, advertisements of nutraceutical foods or fatigue recovery items to the target players 11 who chose the elderly player 11, and advertisements of items for athletes to the target players 11 who chose the young player 11. Furthermore, it is possible to show, to the visitors of the website 100, advertisement related to the venue for the marathon tournament such as advertisements of accommodations and restaurants.

As to the timing to provide the advertisement by the advertising means 5, the advertisement by the advertising means 5 may be displayed together with the display by the display means 3 or the information display means 4 that is shown on the website 100, or may be started up when the advertising means 5 is accessed while it is displayed together with the display of the display means 3 or the information display means 4. Also, the advertisement by the advertising means 5 may be shown at the timing when the screen of the website 100 is switched from the display by the display means 3 to the display by the information display means 4, or at the timing when the screen of the website 100 is switched from the display by the information display means 4 to the display by the display means 3. Moreover, the advertisement by the advertising means 5 may be shown at any timing from the point of time when the website 100 to execute the display means 3 is accessed to the point of time when the virtual marathon 32 is displayed. More specifically, it may be shown before the re-display of the virtual marathon 32 after the setting is changed during the display of the virtual marathon 32 by the display means 3 to change the player 11 (between ST4 and ST5 in FIG. 6), to change the time (between ST7 and ST5 in FIG. 6), and to change the distance (between ST9 and ST5 in FIG. 6). Furthermore, the advertisement by the advertising means 5 may be shown at the timing when the page 41 displaying the information by the information display means 4 is switched. The advertisement may be a still image or may be a video.

Also, the advertisement may be incorporated in the virtual reality (or real space) 31 by the display means 3. As to the specific manner of incorporating the advertisement in the virtual reality (or real space) 31 by the display means 3, it can be considered that the advertisement is incorporated in a banner and a signboard on the roadside of the course of the virtual marathon 32. In this case, the advertisement incorporated in the virtual reality (or real space) 31 may be further developed by being accessed.

Furthermore, the advertisement by the advertising means 5 may be incorporated in the avatar 110 in the virtual marathon 32, or may be incorporated in the avatar 110 when it is customized. As to the specific manner of incorporating the advertisement in the avatar 110 in the virtual marathon 32, it can be considered that the advertisement is incorporated in the wearing items of the avatar 110 such as a wear, shoes, a cap and a watch. In this case, it is possible to advertise the wearing item of the avatar 110 to the visitor by developing the advertisement when the visitor accesses the wearing item of his/her interested avatar 110 during watching the virtual marathon 32. For example, when the visitor accesses the shoes of the avatar 110, the advertisement of the shoes is developed. Through such advertising, it is possible, for example, for the visitors of the website 100 to see the information on a wear or shoes of the top player by accessing the wearing items of the avatar 110 of the top player in the marathon tournament. Here, the avatar 110 of the top player is exemplarily described. The advertisement can be incorporated in each wearing item of all the avatars 110 in the virtual marathon 32. Also, when the player 11 chooses the wearing items (such as a wear, shoes, a cap and a watch) for his/her avatar 110 to customize this avatar 110, wearing items to be advertised may be put in the choices in advance. Then, at the time when the player 11 chooses the wearing item to be advertised for customizing the avatar 110, the advertisement of the wearing item is shown to the player 11. Thus, it is possible to advertise the wearing items while the player 11 enjoys customizing his/her avatar 110.

Furthermore, the advertisement by the advertising means 5 may be incorporated in each page 41 of the information display means 4. For example, an advertisement of a supporting company may be incorporated in the profile specified in the display page 41a. Also, the advertisement may be developed at the timing when the page 41 is switched from one to another, or when the records are re-displayed after changing the distance and/or time.

The articles to be advertised using the advertising device 1 are not particularly limited. For example, the articles may be the goods sold by shops related to the event, such as wears, shoes, caps, watches, foods and various kinds of equipment. However, the articles are not limited thereto. They may be articles that can use the image of the player 11 who participates in the event, or may be articles that promote the region where the event is organized. However, taking into account the configuration of the advertising device 1, it is effective to advertise the goods especially used for the event.

With the advertising device 1, the virtual marathon 32 is released on the website 100 on which the display means 3, the information display means 4 and the advertising means 5 function using the information collected by the information collection means 2. Thus, the visitors of the website 100 can enjoy the atmosphere at the time of the actual event by the reproduced event. Especially, in the case where the visitor is the player 11 who actually participated in the virtual marathon 32, when he/she selects his/her avatar 110, he/she can enlarge or reduce the screen using the display means 3 so as to enlarge/reduce the course of the marathon tournament as a plane image, or to reproduce the course as a stereoscopic image from the viewpoint of the player 11. Also, the player 11 can move freely his/her avatar 110 to the desired time/position. Furthermore, since the atmosphere at the time of the real event including the players 11 around him/her can be reproduced in the virtual marathon 32 also using the avatars 110, the player 11 can remember and enjoy the atmosphere at that time.

Also, the visitor can search for pieces of detail information on him/herself, his/her friend or the top player by the information display means 4 so as to enjoy comparing them. While the visitor enjoys him/herself as described above, the advertising means 5 can show the advertisement to the visitor of the website 100. In this case, the advertising means 5 does not only show the advertisement embedded in the screen of the website 100 displayed by the display means 3 or the information display means 4, but also shows: the advertisement at the timing when the screen of the website 100 is switched; the advertisement incorporated in the virtual reality (or real space) 31 by the display means 3; the advertisement incorporated in the wearing items of the avatars 110; the advertisement depending on the selected player 11; the advertisement when customizing the avatar 110; and the advertisement at the timing when obtaining the detail information by the information display means 4. In particular, it is easy to introduce the products related to the marathon by showing the advertisement incorporated in the wearing item of the avatar 110, by showing the advertisement incorporated in the virtual reality (or real space) 31, or by showing the advertisement when customizing the avatar 110. Thus, it is possible to prevent the advertisement from being shown to someone who are not interested in the marathon, which results in the effective advertisement.

Also, in the case where the player 11 who participated in the marathon tournament is sponsored by a certain company, the advertisement of the company can be embedded, by the advertising means 5, in the display page 41a of the information display means 4, where the profile of the player 11 is displayed. By showing such an embedded advertisement, the player 11 can recognize his/her own advertising effectiveness, and the sponsor company also can measure the advertising effectiveness using the player 11. Thus, effective advertising is possible.

The information display means 4 is not needed to display only the information linked to the virtual marathon 32 that is being reproduced by the display means 3. That is, even when the avatar 110 has moved to the 10 kilometer point from the starting line in the virtual marathon 32 reproduced by the display means 3, detailed information on the record of the player 11 by the information display means 4 may display the information on all the points from the starting line to the finishing line. In this way, the player 11 can obtain, by the information display means 4, the detailed information on his/her record, and thus the player 11 can confirm and enjoy repeatedly his/her running at the various points on the course. A visitor who did not participate in the marathon tournament also can watch and enjoy repeatedly the record of his/her friend or the top player. As a result, it is possible to show repeatedly the advertisement by embedding it in these pages by the advertising means 5.

Also, it is possible for the player 11 to display his/her record and the records of the selected players 11 in a comparative manner on the respective pages 41 displayed by the information display means 4 by selecting the players 11 such as his/her friend participating in the same marathon tournament, the winner, and the player at the top rank by age. When displaying the records in a comparative manner, it is possible, for example, to comparatively display the mileage of each player 11 at the time one hour after the start on the mileage comparison page 41c. Also, it is possible to comparatively display the time taken by each player 11 for passing the 10 kilometer point from the starting line by the time comparison page 41d. By the above comparison, the player 11 can compare and enjoy repeatedly his/her record to the records of various players. A visitor who did not participate in the marathon tournament can also compare and enjoy repeatedly the records of his/her friend and the top player. As a result, it is possible to show repeatedly the advertisement by embedding it in these pages 41 by the advertising means 5.

The advertising device 1 may release each marathon tournament on a corresponding website, or may release every marathon tournaments gathered on one website 100 by integrating the data on those marathon tournaments by the advertising device 1. When the data on only one marathon tournament is indicated, the number of visitors of the website 100 may be limited. When the website 100 shows collectively the data on a plurality of tournaments, the number of the visitors of the website 100 is expected to increase. Thus, effective advertising is possible for any general sports goods company that intends to show the advertisement to as many visitors as possible.

Furthermore, in the integrated website 100, the data on the marathon tournament currently viewed may be compared to the data on another marathon tournament. When the data on the marathon tournament currently viewed can be compared to the data on the other marathon tournament, it is possible to analyze difficulty depending on tournament, difference in physical conditions at the time of the actual tournament, and strong/weak points of the player. Thus, the player can compare his/her own record in one tournament to that in the other tournament, by which the player can enjoy him/herself much more than simply comparing the data in one tournament, and the advertisement by the advertising means 5 can get a number of hits. When the data on the marathon tournament currently viewed is compared to the data on the other tournament, since each tournament has its corresponding virtual reality (or real space) 31 different form each other, the display means 3 may superimpose, as a reference, the information on the avatars 110 in one virtual marathon 32 on the virtual reality (or real space) 31 of the other virtual marathon 32, by matching the time axis (from the start) of the one virtual marathon 32 with the time axis of the other (regarding the position information, in the case where the running course is different from each other, it is sufficient to match the distance only). Or, the display means 3 may display both virtual marathons 32 and 32 in the respective virtual realities (or real spaces) 31 and 31 side by side. Also, the information display means 4 may superimpose, as a reference, the detail information on another tournament on the detail information displayed on the page 41 by matching the time axis (from the start) of the one with the time axis of the other (regarding the position information, in the case where the running course is different from each other, it is sufficient to match the distance only). Or, the information display means 4 may display both pieces of detail information displayed on the respective pages 41 by the respective information display means 4 side by side.

The comparison of the data on the marathon tournament currently viewed to the data on another marathon tournament is described above. Furthermore, in place of the other marathon tournament, it is possible to superimpose, as a reference, GPS information on a predetermined distance that was measured and run by the visitor on the data on the marathon tournament currently viewed by matching the time axis (from the start) of the one with that of the other (regarding the position information, in the case where the running course is different from each other, it is sufficient to match the distance only). In this way, it is possible for the visitor to enjoy comparing his/her record to that of the top player or of his/her friend. In addition, when the above GPS data obtained by running the predetermined distance is data on a short distance (e.g. 10 km) relative to the data on the marathon tournament currently viewed (42.195 km), it is not necessary to superimpose them by matching the respective time axes from the start. The data may be superimposed by matching the time axes from a desired point. For example, when the course of the marathon tournament includes an uphill from the 15 kilometer point to the 20 kilometer point, and when the visitor wants to compare his/her running to that of the top player who participated in the marathon tournament by using GPS information on 5 kilometer distance of a similar uphill measured and run by the visitor, it is possible to superimpose the data by matching the time when the target top player passes the 15 kilometer passing point with the starting time of the data on the distance of 5 km prepared by the visitor. Thus, the visitor can compare his/her running on the uphill to the top player's running on the uphill at the time of the marathon tournament. It is naturally possible to make comparison by matching the position information when the visitor uses the data when he/she ran the same course as the marathon tournament.

Advertising revenue obtained from the advertising device 1 can be distributed to the players registered as a professional player, the organizer of the tournament, and the website operator. In this case, the player registered as a professional player can earn an income according to the number of hits that he gets by the advertising means 5, which leads to fair evaluation of his/her ability and/or popularity. Also, it is sufficient for the advertiser to pay advertising rates according to the number of hits. Thus, effective advertising is possible.

In many cases of marathon tournament, the organizer of the tournament is a local government that intends to improve local economic effects by organizing the tournament. That is to say, the local government cannot obtain benefits until the tax revenue from the local companies increases, and only some urban marathons can satisfy the above conditions. Thus, in the local marathon tournament held in a rural area where there are not many restaurants, accommodations and tourist facilities, it is difficult to expect improvement of the economic effects similarly to those in the urban marathon. However, with the advertising device 1, the organizer of the tournament is required to only provide the data collected by the information collection means 2 of the advertising device 1, and after that, the organizer can obtain the advertising revenue according to the number of hits of the website 100. Thus, even when the venue for the marathon tournament is a country side where the improvement of the economic effects cannot be expected, it is still possible to obtain the advertising revenue. Therefore, it is possible for a local government to organize a marathon tournament or the like so as to improve the economic effects similarly to the case of the urban marathon, even when the local government is under the severe fiscal situation because of the decreasing birthrate and the aging population, and/or the declining population. Also, with the above effects provided by the advertising device 1, not only urban marathon tournaments but also local marathon tournaments can be easily organized. Thus, the advertiser can provide the advertisement all over Japan, which improves the advertising effects.

The kinds of the events to which the above-described advertising device 1 can be applied are not particularly limited provided that the position information over time on the player 11 who participates in the event can be enjoyed after the actual event. The events may be, apart from the above-described marathon tournament,: various running competitions including long-distance running events using general roads such as road race, Ekiden (long-distance relay road race), and trail running; various tournaments using a bicycle (e.g. a MTB, a road bike, and a BMX); various tournaments combining a plurality of games such as biathlon, triathlon, and adventure race; various swimming competitions in open water; motor race; motorcycle race; various water sports such as windsurfing, jet ski, canoe race, and yacht race; orienteering; rogaining; and various races on the snow using skis, a snow board, and a snowmobile. Thus, various events for competing the arrival order and time are included.

Also, the events may include various events in which a battle is taken place in formation such as soccer, basketball, handball, water polo, volleyball, tennis, badminton, rugby, American football, futsal, hockey and lacrosse. However, in those cases, the position information on the ball or the like that is used in the game is also required. Thus, the information collection means 2 should collect also the position information over time on the ball or the like.

Also as shown in FIG. 7, the events to which the advertising device 1 can be applied may include an event such as golf in which the position information on a ball 6 is more important than the position information on the player 11, to the extent that the position information on the ball 6 can be collected from the position information on the player 11. More specifically, in the golf, the player 11 stops to hit the ball 6. Thus, the hitting position at which the player stops is the stopping point 6a of the ball 6. Apart from that, the player may be considered to move on the cart path 63 of each hole 61 on the cart or to move on foot. Therefore, it is possible to collect the information on the stopping point 6a of the ball 6 by collecting the position information over time on the player 11 using the information collection means 2 so as to confirm the position at which the player 11 stops. Thus, in place of collection of the position information on the ball 6 itself, it is possible to collect the information on the stopping point 6a of the ball 6 to computerize a trajectory 60 of the ball 6 for each hit in the game. However, the player 11 also stops, other than the time at which he/she hits the ball 6, to watch the play of another player 11 when the other player 11 is hitting the ball 6. Thus, based on the information on the positon where the player 11 simply stops, it is not possible to distinguish the stopping point 6a of the ball 6 from the stopping position of the player 11 for other reasons (e.g. watching the ball 6 hit by the other player 11). Taking into account the above distinction, the information collection means 2 preferably use, apart from the GPS function for collecting the position information on the player 11, the wristband type of smart terminal 22 that includes an acceleration sensor (not shown). In this case, when the player 11 swings a golf club 62, the acceleration sensor reacts to recognize that the ball 6 is hit. Even when the player 11 swings the golf club 62 without the ball as a practice before the hitting, since the acceleration sensor detects impact at the time of hitting the ball 6 by the golf club 62, the acceleration sensor can recognize the difference between the practice swing and the hitting the ball 6 so as to reliably detect the position at which the player 11 hits the ball 6, i.e. the stopping point 6a of the ball 6. However, the information collection means 2 may have a correction function to correct an erroneous recognition in case that the acceleration sensor erroneously detects the practice swing as the real hitting. Also, even when the information on the stopping point 6a of the ball 6 is collected based on the position information over time on the player 11, the position of a pin 64 of each hole 61 should be input in advance, since the player 11 does not substantially stop except for picking up the ball 6 at the position of the pin 64 where the ball 6 goes in the cup. For the position information collected as described above, the information on the stopping point 6a of the ball 6 when the player 11 stops to hit the ball 6 is indispensable. However, the position information on other movements of the player 11 may be totally collected.

Also, when the information collection means 2 does not include the acceleration sensor, the player 11 may, before hitting the ball 6 at the stopping point 6a of the ball 6, store the position information on the position at which the player 11 hits the ball 6, i.e. the stopping point 6a of the ball 6 by pressing a button (not shown) provided on the smart terminal 22 as the information collection means 2, as shown in FIG. 8. In this case, it is possible to use the smart terminal 22 including input keys in place of the button so as to input the number of the club 62 to be used. With this configuration, it is possible to easily computerize, after a round, not only each stopping point 6a of the ball 6 but also the club 62's number when the ball is hit at each stopping point 6a. Here, as the smart terminal 22, a Smartphone having the GPS function can be used. In FIGS. 7 and 8, the elements that are the same as those in FIG. 2 have respectively the same reference numerals, and the description thereon is omitted.

With the configuration as described above, the advertising device 1 can obtain the information on the trajectory 60 of the ball 6 hit by the player 11 on each hole 61 by the information collection means 2. The GPS position information collected by the information collection means 2 coincides, at the position at which the ball 6 is hit, with the stopping point 6a of the ball 6. However, the GPS position information on the place other than above is a trajectory of the player 11 who moves on the hole 61 by the cart or the like, not the trajectory 60 of the hit ball 6. Therefore, the trajectory 60 of the hit ball 6 is obtained by connecting the respective stopping points 6a of the ball 6 by a line so as to process it as a virtual trajectory 60 of the hit ball.

As shown in FIGS. 9(a) to 9(c), the display means 3 reproduces, on the website 100, the play of the player 11 on each hole 61 by combining the virtual reality (or real space) 31 corresponding to each hole 61 with the trajectory 60 of the ball 6 hit by the player 11 on each hole 61 and also the avatar 110 of the player 11. When another player 11 who played in the golf tournament also uses the advertising device 1, he/she may enjoy comparing his/her trajectory 60 of the ball 6 to that of the player 11. The manner of display by the display means 3 is not particularly limited. It may be a video that is developed in the virtual reality (or real space) 31 corresponding to each hole 61 by displaying each trajectory 60 of the ball 6 every time the avatar 110 of the player 11 hits the ball 6, or may simply display the stopping point 6a of the ball 6 for every hitting. Also, the virtual reality (or real space) 31 corresponding to each hole 61 may be displayed as a plane display or a stereoscopic display, or may be displayed in both manners.

In the stereoscopic display, the trajectory 60 of the ball 6 is displayed as a parabola that is connected to the next stopping point 6a of the ball 6, which is calculated based on the driving distance or based on the used club 62 and the driving distance. For example, when a driver is used as the club 62, the sharpest parabola may be displayed when using the driver of number 1, and the shape of the displayed parabola may become loose as the shaft number of the driver is increased. In the same way, when an iron is used as the club 62, it is possible to display, using an angle of the head and the like, the parabola gradually loosens as the shaft number of the iron is increased. When a putter is used as the club 62, the ball 6 rolls, and thus a straight line along the green can be displayed. When information on the grain of the green can be obtained, the line may be displayed as a curved line taken into account the grain of the green. When the used club 62 is not clear, the parabola when using an appropriate club 62 is displayed based on the driving distance. The virtual play by the display means 3 is reproduced based on the information constructed in the server 10 by the information collection means 2. In addition, if all pieces of position information on the player 11 are collected, it is possible to reproduce, using the avatar 110, all the movements of the player 11 other than hitting the ball 6 (i.e. moving to another hole, watching another player's play, chatting with other players and the like) based on these pieces of position information. The movements of another player 11 who played on the day of the golf tournament can be also reproduced using the avatar 110 if all pieces of position information on the other player 11 are collected.

The information display means 4 can switch the display on the website 100 to the respective pages 41 using the information constructed in the server 10. The respective pages 41 display adapted detail information on the things other than the virtual play on each hole 61 by the display means 3 (i.e. detail information on each hole 61 and on each player 11).

The detail information on each hole 61 and on each player 11, which is displayed by the information display means 4, may include, for example, the display page 41a that shows profiles such as the distance and/or the height difference of the hole 61 currently viewed or commentary on strategy by a professional player, as shown in FIG. 10(a). Also, it may include, as shown in FIG. 10(b), the display page 41b that reproduces the virtual play that got the best score on each hole 61 based on the pieces of information constructed in the server 10 by the information collection means 2. Or, it may be the display page (not shown) that reproduces the virtual display by the professional player.

The detail information on each hole 61 and on each player 11, which is displayed by the information display means 4, may further include the display page 41c that displays a plurality of virtual plays on each hole 61 by the player 11 his/herself and other players 11 (such as a friend accepted to view the page, another visitor and a professional player) in a comparative manner, as shown in FIG. 10(c).

The detail information on each hole 61 and on each player 11, which is displayed by the information display means 4, may further include a display page 41d that displays the virtual plays on the plurality of holes 61 (in this embodiment, the 1^{st} hole to the 6^{th} hole) as a height topography as shown in FIG. 10(d), and a display page 41e that displays the above virtual plays as a plane display, as shown in FIG. 10(e).

The examples as described above are merely examples, because the displays by the information display means 4 may include any variations based on the information constructed in the server 10 by the information collection means 2.

As shown in FIGS. 9 and 10, the advertising means 5 is embedded in the screen by the display means 3 and the information display means 4 in the same manner as that in the above-described marathon tournament. The advertisement is shown when the website 100 is viewed or when the page is switched.

With this advertising device 1, the player 11 can compare his/her play to his/her own past information when he/she played on the same course, or to the information on other players 11 such as a friend, someone who got the best score, a winner of the golf tournament, and a professional player.

In this way, the player 11 can visit the website 100, after returning home for example, to enjoy him/herself by looking back on his/her round of golf or by considering how to capture the golf course by comparing his/her play to that of another player 11. The player 11 can also visit the website 100 during the round of golf so as to collect and draw on the information on the other players 11 to decide the hitting direction or a club to be used. While the player 11 thus enjoys the display means 3 and the information display means 4, the advertising means 5 can provide the advertisement in between the displays by the display means 3 and the information display means 4. In particular, when the player 11 enjoys watching the trajectory 60 of the ball 6 by the display means 3, it is possible to show the trajectory 60 of the ball 6 hit by the professional player on the same course by the information display means 4 while showing the advertisement related to clubs, balls, equipment and the like used by the professional player on the course by the advertising means 5. Thus, the advertising effect by the advertising means 5 is improved.

Also, for the professional player, it is possible to advertise the products by the advertising means 5 while showing his/her own play by the information display means 4, apart from the simple advertisement of the products. Thus, the professional player can demonstrate, to the sponsor, how much he/she contributes to the advertisement.

The company that runs the advertisement can also enjoy the fruit of improvement of the advertisement. That is, since the advertising means 5 shows the advertisement related to clubs, balls, equipment and the like used by the professional player on the course while the information display means 4 shows the trajectory 60 of the ball 6 of the professional player on the course, the above goods used by the player become more familiar to the visitor who watches the website 100, which easily leads to the intention to try them. Also, the company can get a rough idea to determine how much the professional player whom the company sponsored contributes to the advertisement by counting the number of times the information on the professional player 11 disclosed on the website 100 of the advertising device 1 is accessed. Furthermore, since the company can eliminate the general persons who do not play the golf so as to narrow down the target consumers, it is possible to effectively advertise the products.

The golf course can also attract customers by disclosing, on the website 100, the information on the professional player who played a round of golf on this course, since it increases demand of general customers who want to compare their respective records to the information on the professional player. Thus, for the golf course where the golf tournament was held, it is possible to spread its attraction by releasing the information collected at the time of the tournament on the website 100. Furthermore, even when a certain golf course is unpopular because no tournament is held, it can invite a popular professional player to play a round and collect and release information on the invited professional player in order to increase the number of customers.

The information collection means 2 used in the golf may further include a distance measurement function to measure the remaining distance to the pin 64. In this case, the information collection means 2 can recognize, in advance, the range of each hole in the golf course and the position information of each pin. Thus, the information collection means 2 determines on which hole the player 11 currently plays based on the position information on the player 11, and displays the remaining distance from the current position of the player 11 to the pin 64 of that hole. In this way, once the position information on the player 11 is acquired, it is possible to automatically recognize on which hole of which golf course the player 11 currently plays so as to display the remaining distance to the pin 64. However, depending on the golf tournament, the use of distance measurement equipment may be prohibited to measure the remaining distance to the pin 64. Accordingly, the information collection means 2 may display the remaining distance from the current position of the player 11 to the pin 64 only after entering the golf course and the hole. With the information collection means 2 further including the distance measurement function, the player 11 carries around the information collection means 2 not only for collecting the information but also for using it as distance measurement equipment. Thus, the player 11 is not needed to ask the remaining distance to a caddie during the play, and can make an accurate understanding of the remaining distance to the pin 64. Also in this case, the remaining distance may be displayed simply as a value, or may be displayed as a plane display with a contour map to show the difference in height or as a stereoscopic display.

As the event to which the advertising device 1 is applicable, a concert such as a brass band concert may be included, although the position information on the player 11 who participates in the event does not considerably change relative to the above-described embodiments. In this case, the information collection means 2 obtains sound information in addition to information on arrangement of musical instruments. Thus, it is possible to reproduce a virtual concert by the display means 3 using the same sound source. In the display of detail information by the information display means 4, it is possible to listen independently the sound information on each musical instrument played by the player 11, or to display the performance accuracy rate by comparing the sound information to the musical score. Furthermore, it is possible to enjoy changing the sounds of the virtual concert to the visitor's own version, that is, mixing independently the sound information on each musical instrument of the corresponding player 11 to change the sound valance, listening the sound for each section such as a string section and a brass section, or removing the sounds of certain musical instruments. It is possible to know which musical instrument the visitor is interested in based on the detail information on the player 11 that is viewed by the visitor. Thus, the advertiser can easily advertise musical instruments or musical equipment. Also, it is possible for a musician corresponding to the player 11 to make the visitors listen his/her play individually or to make them know his/her skills through the performance accuracy rate. Furthermore, it is beneficial for orchestras or music halls to earn not only the gate receipts on the day of the concert but also the advertising revenue by the advertising device 1, which contributes to improvement of the economic effects. In addition, with the above-described configuration, people who live too far from the music hall to go to the concert can enjoy the virtual concert.

### Description of Reference Numerals

- 1: Advertising device
- 11: Player
- 110: Avatar
- 100: Website
- 2: Information collection means
- 3: Display means
- 4: Information display means
- 5: Advertising means
- 6a: Stopping point (position information)

## Claims

1. An advertising method comprising:
an information collection step of collecting, during an event, position information over time on each of players who participates in the event;
a display step of reproducing and displaying the event on a website by combining information including the position information on each of the players with a virtual reality or real space using an avatar corresponding to each of the players;
an information display step of providing, when a visitor of the website selects a preferred player among the players, information on the selected player at a time of the event; and
an advertising step of providing the visitor of the website with an advertisement set in advance in the display step and/or the information display step.

2. The advertising method according to claim 1, wherein, in the advertising step, when the preferred player is selected in the information display step, an advertisement of a sponsor company that supports the selected player is provided.

3. The advertising method according to claim 1 or 2, wherein, in the information display step, when a preferred avatar is selected in the reproduced event, a player corresponding to the avatar is selected among the players.

4. The advertising method according to any one of claims 1 to 3, wherein, in the information display step, other players are selected among the players in addition to the selected player as a main player so as to compare respective records of the selected players in the event.

5. The advertising method according to any one of claims 1 to 4, wherein, in the display step, when the preferred player is selected, the event in the virtual reality or real space is reproduced from a viewpoint of the selected player during the event.

6. The advertising method according to any one of claims 1 to 5, wherein, in the display step, an avatar registered by each of the players is shown to another player who is registered as a friend by a corresponding player among the players.

7. The advertising method according to any one of claims 1 to 6, wherein, in the display step, a second avatar is displayed in such a manner that the second avatar is superimposed on the display of the avatar in the event currently displayed, and wherein the second avatar is prepared based on information collected in the information collection step on a corresponding player in another event.

8. The advertising method according to claim 7, wherein, in the information display step, a record of the preferred player is compared to a record of the player corresponding to the second avatar in the other event.

9. The advertising method according to any one of claims 1 to 8, wherein, in the display step, a number of the avatars displayed in the virtual reality or real space is limited using filtering conditions set in advance.

10. The advertising method according to any one of claims 1 to 9, wherein, in the advertising step, the advertisement is shown in the virtual reality or real space.

11. An advertising device comprising:
display means for reproducing and displaying an event on a website based on position information over time collected during the event on each of players who participates in the event, by combining information including the position information on each of the players with a virtual reality or real space using an avatar corresponding to each of the players;
information display means for providing, when a visitor of the website selects a preferred player among the players, information on the selected player at a time of the event; and
advertising means for providing the visitor of the website with an advertisement set in advance in the display means and/or the information display means.

12. The advertising device according to claim 11, wherein the advertising means provides, when the preferred player is selected in the information display means, an advertisement of a sponsor company that supports the selected player.

13. The advertising device according to claim 11 or 12, wherein the information display means selects, when a preferred avatar is selected in the reproduced event, a player corresponding to the avatar among the players.

14. The advertising device according to any one of claims 11 to 13, wherein the information display means selects other players among the players in addition to the selected player as a main player so as to compare respective records of the selected players in the event.

15. The advertising device according to any one of claims 11 to 14, wherein the display means reproduces, when the preferred player is selected, the event in the virtual reality or real space from a viewpoint of the selected player during the event.

16. The advertising device according to any one of claims 11 to 15, wherein the display means shows an avatar registered by each of the players to another player who is registered as a friend by a corresponding player among the players.

17. The advertising device according to any one of claims 11 to 16, wherein the display means displays a second avatar in such a manner that the second avatar is superimposed on the display of the avatar in the event currently displayed, and wherein the second avatar is prepared based on information collected in an information collection step on a corresponding player in another event.

18. The advertising device according to claim 17, wherein the information display means compares a record of the preferred player to a record of the player corresponding to the second avatar in the other event.

19. The advertising device according to any one of claims 11 to 18, wherein the display means limits a number of the avatars displayed in the virtual reality or real space using filtering conditions set in advance.

20. The advertising device according to any one of claims 11 to 19, wherein the advertising means shows the advertisement in the virtual reality or real space.

21. A computer program comprising instructions to operate the advertising device according to any one of claims 11 to 20.
